# EUROPEAN PATENT APPLICATION

(11) **EP 2 815 927 A1**
(43) Date of publication of application: **24.12.2014**
(21) Application number: 13749667.5
(22) Date of filing: 17.01.2013
(51) Int. Cl.: B60R 16/02, H04M 1/00, H04W 4/04, H04W 92/08

(54) **VEHICLE-USE INFORMATION PROVIDING DEVICE**

(30) Priority: 15.02.2012 JP 2012030873; 25.05.2012 JP 2012119124
(71) Applicant: Nippon Seiki Co., Ltd., Niigata 940-8580 (JP)
(72) Inventor: TAMURA,Shigeaki, Nagaoka Niigata (JP)
(74) Representative: Carpmaels & Ransford LLP
(86) International application number: PCT/JP2013/050737
(87) International publication number: WO 2013/121824

(57) **Abstract**

Provided is a vehicle-use information providing device which has an improved human-machine interface and, by having a configuration for carrying out provision of information taking into account the level of available attention of a user while driving, is capable of providing suitable amounts of information when various types of information from an external device are to be provided to the user of the vehicle via a vehicle mounted device. The vehicle-use information providing device is provided with: a vehicle mounted device (102) comprising a first notification means (206) for notifying a user of various states of the vehicle, and a first control means (202) for activating the first notification means (206); and an external device (103) that is connected to the vehicle mounted device (102) via a connection means (104) and comprises a second control means (252) for outputting information from outside the vehicle to the first control means (202). The first control means (202) has a function which determines whether the user is to be notified of information from outside the vehicle according to the level of available attention of the user while driving, and upon determining that the level of available attention of the user while driving is low, activates the first notification means (206) only after the level of available attention of the user while driving becomes high.

## Description

### TECHNICAL FIELD

The present invention relates to a vehicle-use information providing device which provides various information to a user of a vehicle, and in particular to a vehicle-use information providing device which provides various information by using a vehicle mounted device and an external device.

### BACKGROUND ART

As a vehicle-use information providing device such as a vehicle information system, for example, Patent Literature 1 discloses a device which connects a mobile information device (an external device) and a vehicle mounted multimedia computer (a vehicle mounted device) with a liquid crystal display installed in a vehicle, and makes them controllable each other. By such a device, a user of a vehicle can use a function of a mobile information device (starting an audio player, a navigation system, an internet browser, and so on) through a vehicle mounted multimedia computer.

### CITATION LIST

### PATENT LITERATURE

Patent Literature 1: Japanese Unexamined Patent Application Publication No. 2001-22482

### SUMMARY OF THE INVENTION

### PROBLEMS TO BE SOLVED BY THE INVENTION

The vehicle-use information providing device described in the Patent Literature 1 enables to use a mobile information device easily in a vehicle, and provides a highly convenient in-vehicle information system (a vehicle-use information providing device) to a vehicle user. In future, it is expected that provision of various information to a vehicle user using a mobile information device will be increased, and there has been room for improvement in provision of information to a user.

Specifically, in provision of information to a user, it is desirable to take into account a level of available attention of a user while driving. In particular, assuming that a vehicle is a motorcycle, when a level of available attention of a user while driving is relatively low as when a bank angle (a tilt angle) of a motorcycle is increased while running a curve of a steep slope, for example, a user is supposed to lose attention to watch a liquid display even while various information about a mobile information device is being displayed. There has been room for further improvement in this regard.

Thus, the present invention has been performed in consideration of the above improvements. Accordingly, it is an object of the present invention to provide a vehicle-use information providing device, which is configured to improve a human-machine interface (HMI) by taking account into a level of available attention of a user while driving when providing various information of an external device to a user of a vehicle via a vehicle mounted device.

### MEANS FOR SOLVING THE PROBLEMS

The present invention has the following characteristics, a vehicle-use information providing device comprising: a vehicle mounted device which is provided with a first notification means for notifying a user of various information about a vehicle, and a first control means for activating the first notification means; and an external device which is connected to the vehicle mounted device via a connection means, and is provided with a second control means for outputting information from outside a vehicle, wherein the first control means has a function which determines whether or not to notify a user of the information from outside a vehicle in accordance with a level of available attention of the user while driving, and when determining that the level of available attention while driving is low, activates the first notification means after the level of available attention while driving is increased.

The present invention has the following characteristics, a vehicle-use information providing device comprising: a vehicle mounted device which is provided with a first notification means for notifying a user of various information about a vehicle, and a first control means for activating the first notification means; and an external device which is connected to the vehicle mounted device via a connection means, and is provided with a second control means for outputting information from outside a vehicle, wherein the second control means has a function which determines whether or not to output the information from outside a vehicle to the first control means in accordance with a level of available attention of the user while driving, and when determining that the level of available attention while driving is low, outputs the information from a vehicle to the first control mans after the level of available attention while driving is increased.

The present invention has the following characteristics, a vehicle-use information providing device comprising: a vehicle mounted device which is provided with a first notification means for notifying a user of various information about a vehicle, and a first control means for activating the first notification means; and an external device which is connected to the vehicle mounted device via a connection means, and is provided with a second control means for outputting information from outside a vehicle, wherein the first control means has a function which determines whether or not to notify a user of the information from outside a vehicle in accordance with a level of available attention of the user while driving, and when determining that the level of available attention while driving is low, activates the first notification means so that the information from outside a vehicle is notified to the user as simplified information from outside a vehicle.

The present invention has the following characteristics, a vehicle-use information providing device comprising: a vehicle mounted device which is provided with a first notification means for notifying a user of various information about a vehicle, and a first control means for activating the first notification means; and an external device which is connected to the vehicle mounted device via a connection means, and is provided with a second control means for outputting information from outside a vehicle, wherein the second control means has a function which determines whether or not to output the information from outside a vehicle to the first control means in accordance with a level of available attention of the user while driving, and when determining that the level of available attention while driving is low, outputs the simplified information from a vehicle to the first control means so that the information from outside a vehicle is notified to the user as simplified information from outside a vehicle.

The present invention has the following characteristics, even when determining that the level of the available attention while driving is low, the first control means activates the first notification means so that the information from outside a vehicle is notified to the user, based on a notifying instruction signal outputted from a predetermined operation means when the user operates the operation means.

The present invention has the following characteristics, even when determining that the level of the available attention while driving is low, the second control means outputs to the first control means so that the information from outside a vehicle is notified to the user, based on a notifying instruction signal outputted from a predetermined operation means when the user operates the operation means.

### EFFECT OF THE INVENTION

The present invention provides a vehicle-use information providing device, which has an improved human-machine interface (HMI), and is capable of providing suitable amounts of information by taking into account of a level of available attention of a user while driving when providing various information of an external device to a user of a vehicle via a vehicle mounted device.

### BRIEF DESCRIPTION OF THE DRAWINGS

[Fig. 1] Fig. 1 is a block diagram showing a state of connection between electrical components and a vehicle-use information providing device according to a first embodiment of the invention.
[Fig. 2] Fig. 2 is a block diagram of a vehicle-use information providing device according to the embodiment.
[Fig. 3] Fig. 3 is a flowchart of processing operations of a first control means according to the embodiment.
[Fig. 4] Fig. 4 is a diagram showing an example of information from outside a vehicle displayed in a first display unit when a level of available attention of a user while driving is increased according to the embodiment.
[Fig. 5] Fig. 5 is a flowchart of other processing operations of a first control means according to a second embodiment of the invention.
[Fig. 6] Fig. 6 is a flowchart of processing operations of a second control means according to a third embodiment of the invention.
[Fig. 7] Fig. 7 is a flowchart of processing operations of a first control means according to a fourth embodiment of the invention.
[Fig. 8] Fig. 8 is a diagram showing an example of simplified information from outside a vehicle displayed in a first display unit when a level of available attention of a user while driving is decreased according to the fourth embodiment.
[Fig. 9] Fig. 9 is a flowchart of processing operations of a first control means according to a fifth embodiment of the invention.

### MODES FOR CARRYING OUT THE INVENTION

### (First embodiment)

Hereinafter, a first embodiment of the present invention will be described with reference to the accompanying drawings.

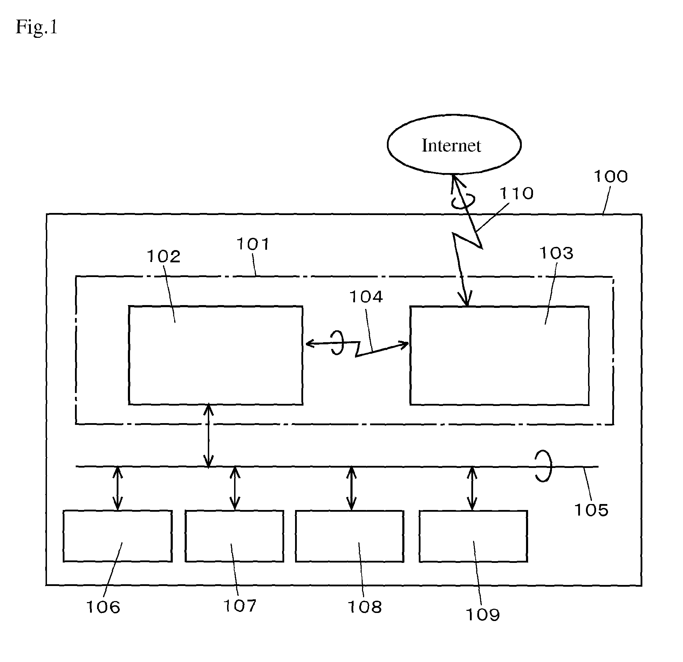

Fig. 1 is a block diagram of an embodiment of the invention. In Fig. 1, a reference numeral 100 denotes a vehicle. A reference numeral 101 denotes a vehicle-use information providing device. The vehicle-use information device 101 comprises a vehicle mounted device (here, a vehicle meter) 102, an external device that is a mobile information device (here, a smartphone), and a connection means that connects the vehicle mounted device 102 and the external device 103.

The vehicle mounted device 102 is connected, via an in-vehicle LAN (a multiple communication line) 105, to electric components such as an audio equipment 106, an air conditioner 107, a body control unit 108, an engine control unit 109, and so on. The external device 103 connected to the vehicle mounted device 102 via the control means 104 can be connected to Internet via a communication means 110.

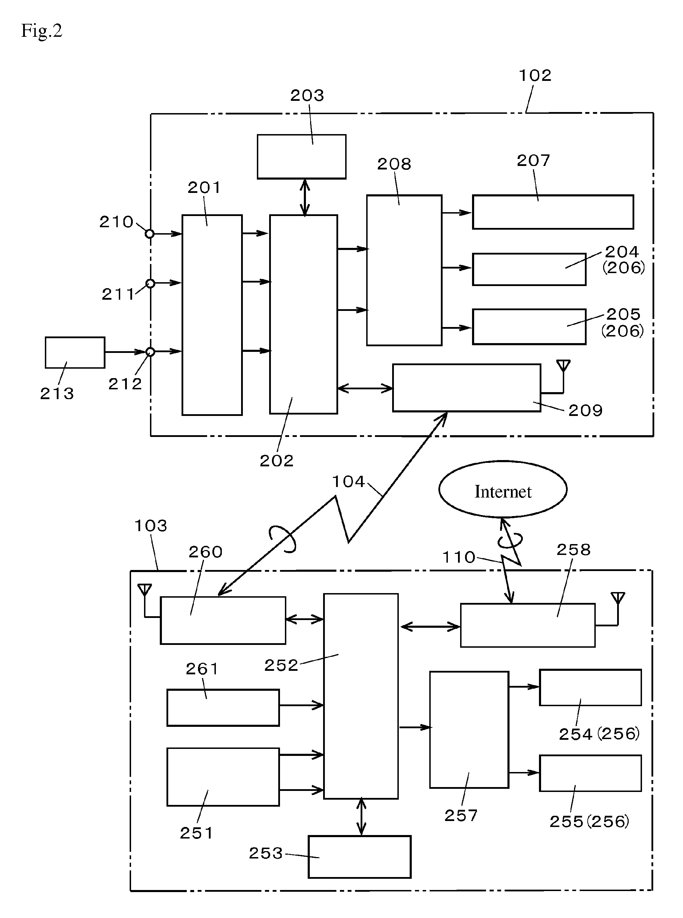

Next, with reference to Fig. 2, a detailed explanation will be given to a configuration of the vehicle-use information providing device 101, which is mainly comprised of the vehicle mounted device 102 and the external device 103. The vehicle mounted device 102 comprises a vehicle information terminal (a vehicle information means) 210 and a multiple communication input/output terminal (a multiple communication input/output means) 211, which perform input/output of various information about a vehicle state (a vehicle state signal), an operation information terminal 212 capable of inputting a notifying instruction signal from a predetermined operation means 213, a vehicle interface (vehicle I/F) means 201, a first control means 202 comprising a microcomputer for example for controlling the vehicle-mounted device 102, a first storage means 203 comprising a nonvolatile memory such as a flash memory and EEPROM for storing a processing program of the first control means 202, a first notification means 206 comprising a first display unit 204 such as a liquid crystal display panel or an organic EL panel for visually notifying various information (various vehicle states) to a user of a vehicle and a first sounding body 205 such as a speaker for audibly notifying various information (various vehicle states) to a user of a vehicle, a first driving means 208 which serves also as a driving control of the first display unit 204, the first sounding body 205, and various analog (pointer type) instructions 207, and a first communication unit (here, Bluetooth (registered trademark)) 209 as a wireless communication means constituting a connection means 104 for connecting the external device 103.

When a vehicle is a motorcycle, the first sounding body 205 may be a helmet speaker housed in a helmet a rider (user) to wear. Although a detailed illustration is omitted, the analog instruments 207 include an analog speedometer indicating a speed of a vehicle, an analog tachometer indicating an engine speed, an analog fuel gauge indicating the amount of fuel in tank, and an analog thermometer indicating a temperature of engine cooling water.

The first communication unit 209 is configured to perform wireless communication with a second communication unit described later provided in the external device 103. In other words, the first communication unit 209 is able to exchange data with the second communication unit provided in the external device 103.

The operation means 213 comprises an operation input unit for performing various operations of the vehicle mounted device 102, for example, a cross key type operation input unit including a cursor button or a decision button or the like provided in an appropriate place in a vehicle accessible from a user. When a user activates the operation means 213, a notifying instruction signal outputted from the operation means 213 is applied to the first control means 202 via the operation information terminal 212 and the vehicle interface means 201. Further, the operation means 213 can use a touch panel type operation input unit instead of the substantially cross-key type operation input unit.

The external device 103 comprises a second communication unit (here, a Bluetooth (registered trademark)) 261 as a wireless communication means constituting a connection means 104 for connecting the vehicle mounted device 102, various sensors (here, a GPS module) 261, an interface (I/F) means 251, a second control means 252 comprising a microcomputer for example for controlling the external device 103, a second storage means 253 comprising a nonvolatile memory such as a flash memory and an EEPROM for storing a processing program of the second control means 252, a second notification means 256 comprising a second display unit 254 such as a display with a touch panel or the like for visually notifying various information (various vehicle states) to a user of a vehicle and a second sounding body 255 such as a speaker for audibly notifying various information (various vehicle states) to a user of a vehicle, a second driving means 257 which serves also as a driving control of the second display unit 254 and the second sounding body 255, and a communication module 258 constituting the communication means 110 for connecting to Internet.

In the embodiment, the first and second communication units 209 and 260, composed of a wireless communication means, are used as the connection means 104 for connecting the vehicle mounted device 102 and the external device 103. The connection means is not limited to this. The connection means 104 may comprise a wired connection means such as a USB for connecting the vehicle mounted device 102 and the external device 103.

Further, in the embodiment, the first communication unit 209 is provided in the vehicle mounted device 102, but not limited to this. For example, it is possible to connect the vehicle mounted device 102 and the external device 103 by providing a not-shown gateway (G/W) means that is connected to the in-vehicle LAN 105, and providing the first communication device 209 in the gate way means.

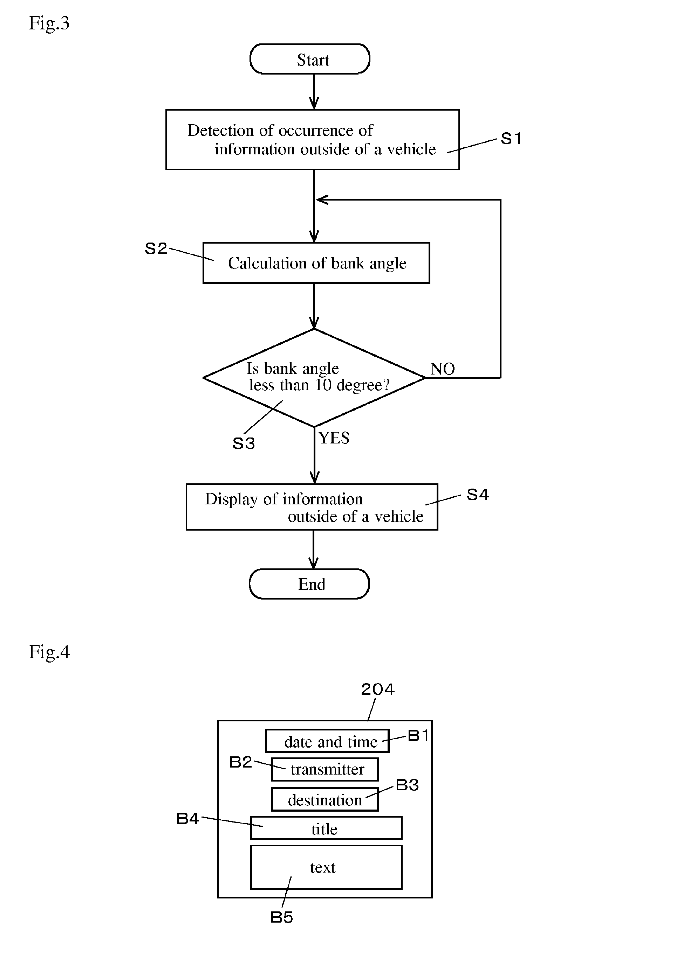

Next, an explanation will be given to a notifying operation of information from outside a vehicle in accordance with a level of available attention of a user while driving by referring to Fig. 2 to Fig. 4. Fig. 3 is a flowchart of processing operation of the first control means 202 in accordance with a level of available attention of a user while driving.

In Fig. 3, the first control means 202 first detects occurrence of information from outside a vehicle (here, information received by e-mail) via the external device 103 (step S1). In particular, the second control means 252 provided in the external device 103 outputs information from outside a vehicle to the first control means 202 provided in the vehicle mounted device 102 via the connection means 104, and the first control means 202 receives the information from outside a vehicle.

Next, the first control means 202 calculates a level of available attention of a user while driving, based on various information about a various state of a vehicle (a vehicle state signal) (step S2). For example, when a vehicle is a motorcycle having a characteristic to tilt during cornering, the first control means 202 determines a level of available attention of a user while driving depending upon whether a bank angle (a tilt angle) of the motorcycle is larger than a predetermined threshold value (angle).

In a state that a motorcycle is upright, a bank angle is zero. As a motorcycle tilts from an upright state, the bank angle increases. In this case, the first control means 202 determines that the level of available attention while driving is high when the bank angle is less than 10 degrees, and that the level of available attention is low when the bank angle is 10 degrees or more (step S3).

When YES in the determination of the level of available attention in step S3 (namely, when the first control means 202 determines that the bank angle is less than 10 degrees), the first control means 202 determines that the level of available attention of a user while driving is high, and display activates the first display unit 204 (the first notification means 206) via the first driving means 208 to display information from outside a vehicle to the first display unit 204.

As a result, the display unit 204 displays the information from outside a vehicle (step S4). In particular, as shown in Fig. 4, the first display unit 204 displays information received by e-mail consisting of a date and time display B1, a transmitter display B2, a destination display B3, a title display B4, and a text display B5.

On the other hand, when NO in the determination of the level of available attention in step S3 (namely, when the first control means 202 determines that the bank angle is 10 degrees or more and the level of available attention of a user while driving is low), the first control means 202 recalculates the level of available attention while driving done in step S2 without notifying the information from outside a vehicle by using the first notification means 206. As described above, in the embodiment, the first control means 202 has a function of determining whether or not to notify a user of information from outside a vehicle in accordance with a level of available attention of a user while driving.

In step S2, the first control means 202 calculates again a level of available attention of a user while driving. When YES in the determinatiohn of the level of available attention in step S3 (namely, when the first control means 202 determines that the bank angle is less than 10 degrees), the first control means 202 determines that the level of available attention of a user while driving is high, and display activates the first display unit 204 (the first notification means 206) to display information from outside a vehicle via the first driving means 208.

As a result, the first display unit 204 displays the information from outside a vehicle consisting of information received by e-mail shown in Fig. 4 (step S4). As desdribed above, in the embodiment, when determining that a level of available attention while driving is low, the first control means 202 activates the first display unit (the first notification means 206) to display (operate) after the level of available attention while driving is increased.

Information from outside a vehicle consisting of such information received by e-mail may be provided (notified) to a vehicle user as visual information by using the first display unit 204, or may be provided (notified) to a vehicle user as audible information by using the first sounding body 205. Or, it may be configured such that a user listens to information from outside a vehicle as audible information by using only the first sounding body 205.

As described above, accoding to the embodiment, it is possible to provide a vehicle-use information providing device having an improved human-machine interface (HMI) comprising a vehicle mounted device 102 having a first notification means 206 for notifying a user of various states of a vehicle and a first control means 202 for activating the first notification means 206, and an external device 103 having a second control means 252 ,which is connected to the vehicle mounted device 102 via a connection means 104, and configured to output information from outside a vehicle to the first control means 202, wherein the first control means 202 has a function which determines whether or not to notify a user of information from outside a vehicle in accordance with a level of available attention of a user while driving, and when determining that the level of available attention while driving is low, activates the first notification means 206 after the level of available attention while driving is increased, thereby when various information (information from outside a vehicle) of the external device 103 is provided to a vehicle user via the vehicle mounted device 102, a level of available attention of a vehicle user while driving is considered (taken into account), and suitable amounts of information can be transmitted to the vehicle mounted device 102.

### (Second embodiment)

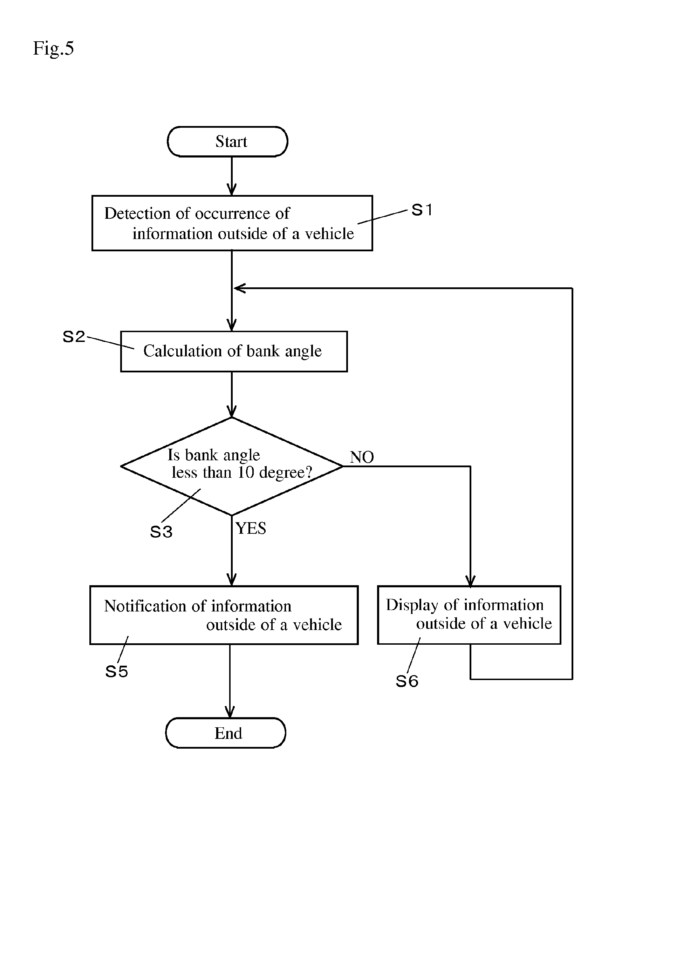

Next, a second embodiment of the invention will be explained with reference to Fig. 5. Same symbols are used for the same or equivalent components as those in the first embodiment, and detailed explanation thereof is omitted. A different point of the second embodiment from the first embodiment is that a first control means 202 activates a first display unit 204 only of a first notification means 206 comprising a first display unit 204 and a first sounding body 205 (namely, provides a user with information from outside a vehicle as visual information) upon determining that a level of available attention of a user while driving is low in step S3, and activates both of the first display unit 204 and second sounding body 205 (namely, providing a user of information from outside a vehicle as visual information and audible information) upon determining that a level of available attention of a user while driving is high in step 3.

In the second embodiment, when YES in the determination of a level of available attention in step S3 in Fig. 5 (namely, when the first control means 202 determines that a bank angle is less than 10 degrees), the first control means 202 determines that the level of available attention of a user while driving is high, and activates the first display unit 204 to display information from outside a vehicle via the first driving means 208, and at the same time, activates both of the first display unit 204 and the first sounding body 205 via the first driving means 208 to let a user listen to the information from outside a vehicle as audible information.

As a result, the first display unit 204 displays the information from outside a vehicle consisting of information received by e-mail that is employed in the first embodiment as shown in Fig. 4, and at the same time, a user can listen to the information from outside a vehicle emitted from the first sounding body 205 as audible information (step S5).

On the other hand, when NO in the determination that the level of available attention in step S3 (namely, when the first control means 202 determines that the bank angle is 10 degrees or more and the level of available attention of a user while driving is low), the first control means 202 activates the first display unit 204 to display the information from outside a vehicle via the first driving means 208. Thus, the first display unit 204 displays the information from outside a vehicle consisting of information received by e-mail that is employed in the first embodiment as shown in Fig. 4 (step S6).

After such the step S6, the first control means 202 recalculates the level of available attention while driving in step 2. And, again, the first control means calculates the level of available attention of a user while driving in step 2. When YES in the determination that the level of available attention in step S3 (namely, when the first control means 202 determines that the bank angle is less than 10 degrees), the first control means 202 determines that the level of available attention of a user while driving is high, and activates the first display unit 204 to display the information from outside a vehicle via the first driving means 208, and at the same time, activates both of the first display unit 204 and the first sounding body 205 via the first driving means 208 to let a user listen to information from outside a vehicle as audible information.

As a result, the first display unit 204 displays the information from outside a vehicle consisting of information received by e-mail that is employed in the first embodiment as shown in Fig. 4, and at the same time, a user can listen to the information from outside a vehicle emitted from the first sounding body 205 as audible information (step S5).

According to the second embodiment, the first control means 202 does not activate the first sounding body 205 upon determining that a level of available attention while driving is low, and activates the first sounding body 205 after the level of available attention is increased (more specifically, the first control means activates only the first display unit 204 without activating the first sounding body 205, upon determining that a level of available attention while driving is low, and activates both of the first display unit 204 and the first sounding body 205, after the level of available attention while driving is increased). Thereby, visible notification and audible notification are selectively used in accordance with a level of available attention of a vehicle user while driving and various information (outside information of a vehicle) of the external device 103 can be notified by considering a load of a user.

### (Third embodiment)

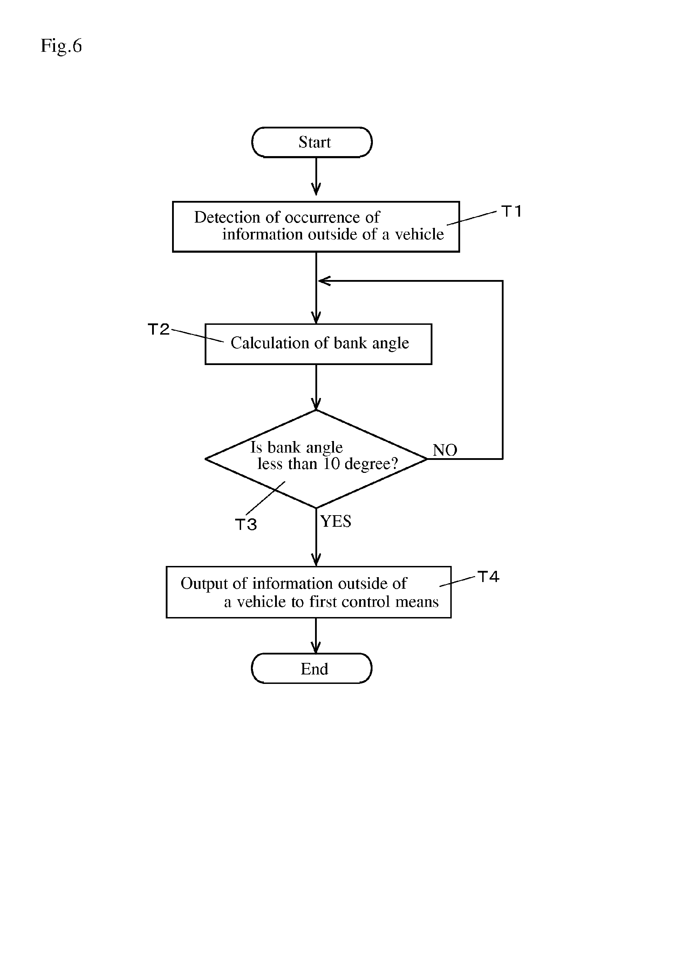

Next, a third embodiment of the invention will be explained with reference to Fig. 6. Same symbols are used for the same or equivalent components as those in the first and second embodiments, and detailed explanation thereof is omitted. A different point of the third embodiment from the first embodiment is that a second control means 252 provided in an external device 103 has a function of determining whether or not to output information from outside a vehicle to a first control means 202 provided in a vehicle mounted device 10 in accordance with a level of available attention of a user while driving, and upon determining that the level of available attention while driving is low, the second control means 252 outputs the information from outside a vehicle to the first control means 202 after the level of available attention while driving is increased.

Fig. 6 is a flowchart of processing operations of the second control means 252 in accordance with a level of available attention of a user while driving in the third embodiment. In Fig. 6, the second control means 252 first detects occurrence of information from outside a vehicle (here, information received by e-mail) (step T1).

Next, the second control means 252 obtains various information about a various state of a vehicle (a vehicle state signal) via a vehicle mounted device 102, and calculates a level of available attention of a user while driving, based on the obtained information (step T2). For example, when a vehicle is a motorcycle having a characteristic to tilt during cornering, the second control means 252 determines a level of available attention while driving depending upon whether a bank angle (a tilt angle) of the motorcycle is higher than a predetermined threshold value (angle).

In this case, the second control means 252 determines that the level of available attention is high when the bank angle is less than 10 degrees, and determines that the level of available attention is low when the bank angle is 10 degrees or more (step T3).

When YES in the determination of a level of available attention in step S3 (namely, when the second control means 252 determines that the bank angle is less than 10 degrees), the second control means 252 determines that the level of available attention of a user while driving is high, and outputs the information from outside a vehicle to the first control means 202 provided in the vehicle mounted device 102 via the connection means 104 (via the first and second communication units 209 and 260) (step T4).

On the other hand, when NO in the determination of the level of available attention in step S3 (namely, when the second control means 252 determines that the bank angle is 10 degrees or more and the level of available attention of a user while driving is low), the second control means 252 recalculates the level of available attention while driving in step T2 without outputting the information from outside a vehicle to the first notification means 202. As described above, in the third embodiment, the second control means 252 provided in the external device 103 has a function of determining whether or not to not to output information from outside a vehicle to the first control means 202 provided in the vehicle mounted device 102 in accordance with a level of available attention of a user while driving.

In step T2, the second control means 252 calculates again a level of available attention of a user while driving. When YES in the determinatiohn of a level of available attention in step T3 (namely, when the second control means 252 determines that a bank angle is less than 10 degrees), the second control means 252 determines that the level of available attention of a user while driving is high, and outputs the information from outside a vehicle to the first control means 202 via the connection means 104 (step T4).

As desdribed above, in the third embodiment, when determining that a level of available attention while driving is low, the second control means 252 outputs information from outside a vehicle to the first control means 202 after the level of available attention while driving is increased.

According to the third embodiment, the second control means 252 provided in the external device 103 has a function of determining whether or not to output information from outside a vehicle to the first control means 202 provided in the vehicle mounted device 102 in accordance with a level of available attention of a user while driving. When determining that the level of available attention while driving is low, the second control means 252 outputs the information from outside a vehicle to the first control means 202 after the level of available attention while driving is increased. Thus, when various information (information from outside a vehicle) of the external device 103 is outputted to the vehicle mounted device 102, a level of available attention of a vehicle user while driving is considered (taken into account). It is possible to transmit suitable amounts of information to the vehicle mounted device 102, providing the same effect as that in the first embodiment.

### (Fourth embodiment)

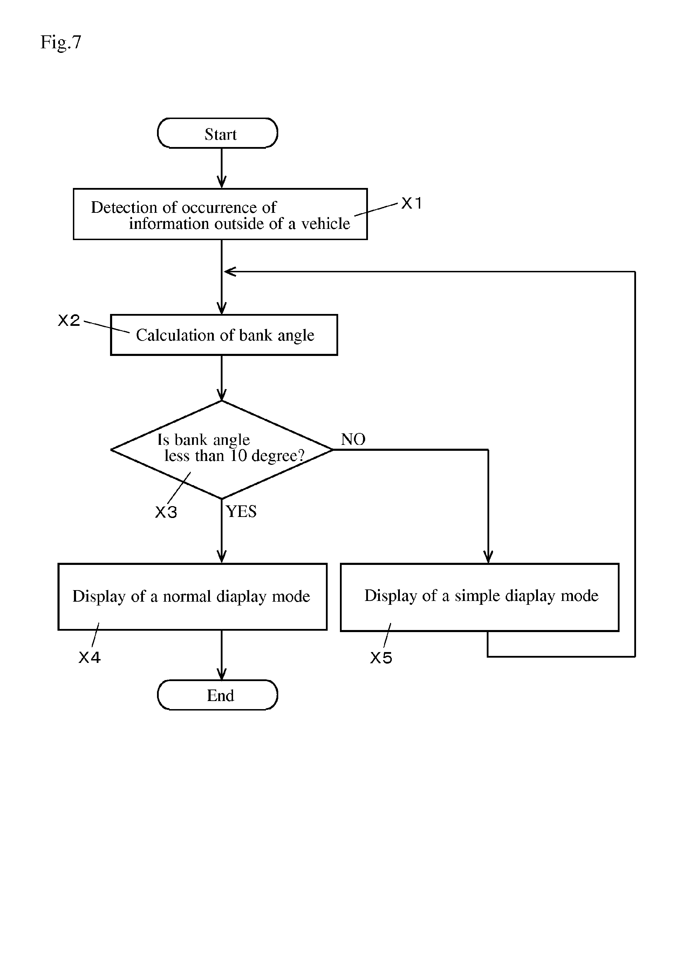

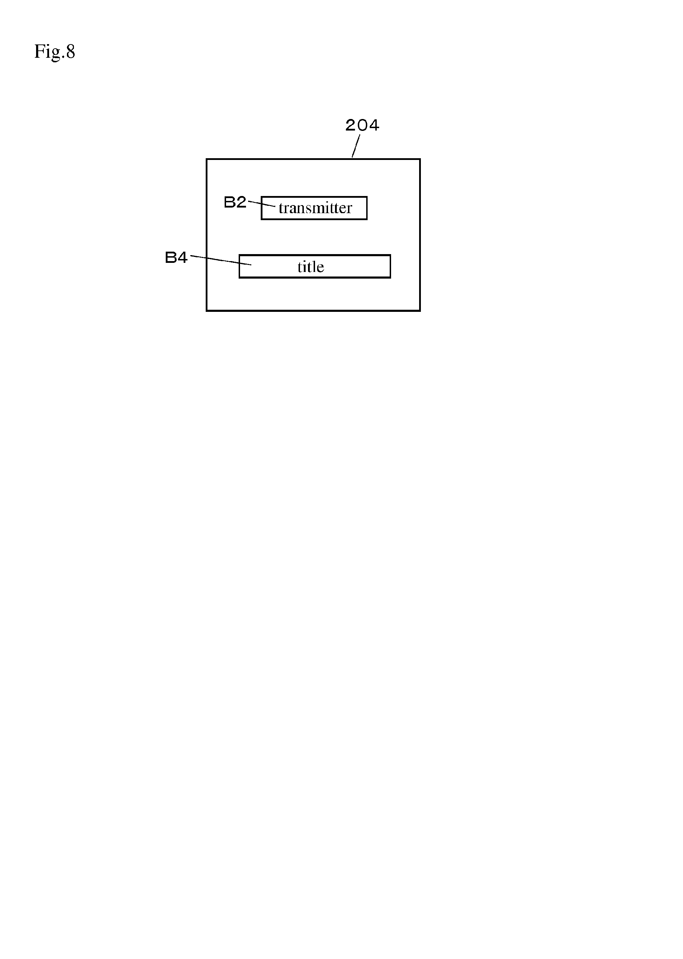

Next, a fourth embodiment of the invention will be explained with reference to Figs. 7 and 8. Same symbols are used for the same or equivalent components as those in the first to third embodiments, and detailed explanation thereof is omitted. A different point of the fourth embodiment from the first embodiment is that a first control means 202 activates a first notification means 206 so that information from outside a vehicle is notified to the user as simplified information from outside a vehicle, when determining that a level of available attention of a user while driving is low.

Fig. 7 is a flowchart of processing operations of a first control means 202 in accordance with a level of available attention of a user while driving in the fourth embodiment. In Fig. 7, the first control means 202 first detects occurrence of information from outside a vehicle (here, information received by e-mail) (step X1). Next, the first control means 202 calculates a level of available attention of a user while driving based on various information about various states of a vehicle (step X2). When a vehicle is a motorcycle, the first control means 202 determines a level of available attention while driving depending upon whether a bank angle (a tilt angle) of the motorcycle is higher than a predetermined threshold value (for example, 10 degrees) (step X3).

When YES in the determination of a level of available attention in step X3 (namely, when the first control means 202 determines that the bank angle is less than 10 degrees), the first control means 202 determines that the level of available attention of a user while driving is high, and display activates the first display unit 204 (the first notification means 206) to display the information from outside a vehicle via the first driving means 208 (step X4). As a result, as shown in Fig. 4, the first display unit 204 displays the information received by e-mail (information from outside a vehicle) consisting of a date and time display B1, a transmitter display B2, a destination display B3, a title display B4, and a text display B5 in the normal display mode.

On the other hand, when NO in the determination of a level of available attention in step X3 (namely, when the first control means 202 determines that the bank angle is 10 degrees or more and the level of available attention of a user while driving is low), the first control means 202 determines that the level of available attention of a user while driving is low, and display activates the first display unit 204 (the first notification means 206) via the first driving means 208 to display simplified information from outside a vehicle in the first display unit 204 (step X5).

As a result, the first display unit 204 displays simplified information from outside a vehicle. In particular, as shown in Fig. 8, the date and time display B1, destination display B3, and text display B5 are hidden. The first display unit 204 displays simplified information received by e-mail (information from outside a vehicle) consisting of transmitter display B2 and title display B4 in a simple display mode.

According to the fourth embodiment, the first control means 202 provided in the vehicle mounted device 102 has a function which determines whether or not to notify a user of information from outside a vehicle in accordance with a level of available attention of a user while driving, and when determining that the level of available attention while driving is high, activates the first notification means 206 to notify a user of information received by e-mail in a normal display mode, and when determining that the level of available attention of a user while driving is low, activates the first notification means 206 to notify a user of the information received by e-mail as simplified information received by e-mail (namely, in a simple display mode).

Therefore, when the level of available attention while driving is high, the first display unit 204 displays the information received by e-mail in the normal display mode. On the other hand, when the level of available attention while driving is low, the first display unit 204 displays the information received by e-mail in the simple display mode. Thus, the amount of visible information to be notified varies (changes) in accordance with magnitude of a level of available attention of a user while driving, and various information (information from outside a vehicle) of the external device 103 can be notified by considering a load of a user.

Further, in the fourth embodiment, the first control means 202 is configured to activate the first notification means 206 to notify a user of information from outside a vehicle as simplified information from outside a vehicle, upon determining that a level of available attention of a user while driving is low. As a modification of the fourth embodiment, for example, although a detailed illustration is omitted, the second control means 252 provided in the external device 103 may have a function which determines whether or not to output information outside a vehicle to the first control means 202 in accordance with a level of available attention of a user while driving, and when determining that a level of available attention of a user while driving is low, outputs simplified information from outside a vehicle to the first control means 202 so that the information from outside a vehicle is notified to a user as simplified information from outside a vehicle.

In this case, upon determining that the level of available attention of a user while driving is high, the second control means 252 outputs information from outside a vehicle in a normal display mode (for example, information received by e-mail) to the first control means 202 provided in the vehicle mounted device 102 via the connection means 104. On the other hand, when determining that the level of available attention of a user while driving is low, the second control means 252 outputs simplified information from outside a vehicle (for example, the aforementioned simplified information received by e-mail) to the first control means 202 provided in the vehicle mounted device 102 via the connection means 104.

Even in the configuration described above, when the first display unit 204 displays the information received by e-mail in the normal display mode, and when the level of available attention while driving is low, the first display unit 204 displays the information received by e-mail in the simple display mode. Thus, the amount of visible notification information to be notified varies (changes) in accordance with magnitude of the level of available attention of a user while driving, and various information (information outside a vehicle) of the external device 103 can be notified by considering a load to a user.

In the fourth embodiment, an explanation has been given to an example in which information outside a vehicle is notified in a normal display mode and information outside a vehicle is notified in a simple display mode by using the first display unit 204. However, by applying the technical concept in the second embodiment, for example, information from outside a vehicle may be notified in the first display unit 204 and in the first sounding body 205 in a normal display mode in which a level of available attention of a user while driving is high, and information from outside a vehicle may be notified in the first display unit 204 only in a simple display mode in which a level of available attention of a user while driving is low.

Further, in the first to fourth embodiment, an explanation has been given to an example in which the first control means 202 determines that a level of available attention of a user while driving is low when a bank angle of a motorcycle is 10 degrees or more. However, the first control means 202 may determine that a level of available attention of a user while driving is low, for example, when a direction indication signal indicating that a user operates a direction indicator lever to change lanes (may turn right or left) is inputted to the first control means 202 via the vehicle information terminal 210 or the multiple communication input/output terminal 211. Or, the first control means 202 may calculate an acceleration of a vehicle based on a vehicle speed signal indicating a running speed of a vehicle inputted to the first control means 202 via the vehicle information terminal 210 or the multiple communication input/output terminal 211, and may determine that a level of available attention of a user while driving is low when the calculated acceleration value exceeds a predetermined threshold value. Further, the first control means 202 may determine that a level of available attention of a user while driving is low when an operation signal indicating that a user is activating the operation means 213 is inputted to the first control means 202 via the operation information terminal 212. As well as the first control means 202, the second control means 252 may determine that a level of available attention while driving depending on the above direction indication signal, vehicle speed signal, and operation signal.

### (Fifth embodiment)

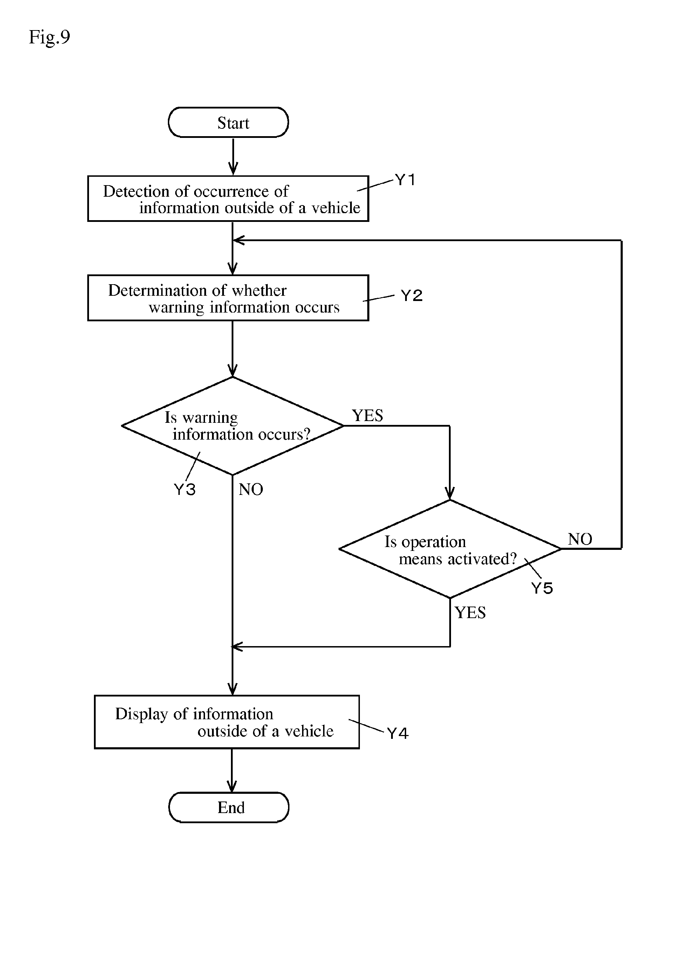

Next, a fifth embodiment of the invention will be explained with reference to Fig. 9. Same symbols are used for the same or equivalent components as those in the first to fourth embodiments, and detailed explanation thereof is omitted. A different point of the fifth embodiment from the first embodiment is that the first control means 202 forcibly activates the first notification means 206 to notify a user of information from outside a vehicle, based on a notifying instruction signal outputted from the operation means 213 when a user activates the operation means 213. The notifying instruction signal mentioned here means a signal for executing notification of information from outside a vehicle by using the first notification means 206.

Fig. 9 is a flowchart of processing operations of a first control means 202 in accordance with a level of available attention of a user while driving in the fifth embodiment. In Fig. 9, the first control means 202 first detects occurrence of information from outside a vehicle (here, information received by e-mail) (step Y1). Next, the first control means 202 determines whether warning information occurs based on each information about various states of the vehicle (a vehicle state signal) (step Y2).

The warning information mentioned here is information indicating that a remaining fuel of a vehicle is small (lowered). The warning information is inputted to the first control means 202 via the vehicle information terminal 210 or the multiple communication input/output terminal 211. Further, in the fifth embodiment, the first control means 202 has a function of determining a level of available attention of a user while driving depending on whether the warning information is inputted (occurs).

Next, when the warning information is not inputted (not occur), the first control means 202 determines that a level of available attention of a user while driving is high. On the other hand, when the warning information is inputted (occurs), the first control means 202 determines that a level of available attention of a user while driving is low (step Y3).

In step Y3, when the first control means 202 determines that the warning information does not occur (namely, the level of available attention of a user while driving is high), the first control means 202 activates the first display unit 204 (the first notification means 206) to display information from outside a vehicle in the first display unit 204, via the first driving means 208 (step Y4). As a result, the first display unit 204 displays information received by e-mail (information from outside a vehicle) consisting of date and time display B1, transmitter display B2, destination display B3, and text display B5 as shown in Fig. 4.

On the other hand, in step Y3, when the first control means 202 determines that the warning information occurs (namely, the level of available attention of a user while driving is low), the first control means 202 determines whether a forcible display instruction (notifying instruction) using the operation means 213 of a user is issued (step Y5).

In step Y5, when the first control means 202 determines that a forcible display instruction is issued (namely, the operation means 213 is activated), a notifying instruction signal is inputted from the operation means 213 to the first control means 202 when the user operates the operation means 213.

Then, the first control means 202 forcibly activates the first display unit 204 (the first notification means 206) via the first driving means 208 to display information from outside a vehicle in the first display unit based on the notifying instruction signal. As a result, the display unit 204 displays information received by e-mail (information from outside a vehicle) consisting of date and time display B1, transmitter B2, destination display B3, and text display B5 as shown in Fig. 4 (step Y4).

Further, in step Y5, when the first control means 202 determines that a forcible display instruction is not issued (namely, the operation means 213 is not activated), the first control unit 202 determines again whether warning information is issued in step Y2 without notifying information from outside a vehicle using the first notification means 206.

According to the fifth embodiment, even when determining a level of available attention of a user while driving is low (namely, warning information occurs), the first control means 202 forcibly activates the first notification means 206 so that the information from outside a vehicle is notified to a user, based on a notifying instruction signal that is outputted from the operation means 213 when the user operates the operation means 213. Thereby, it is possible to provide information in accordance with a vehicle user's preference for a matter with enough time to determine as remaining fuel warning in particular, and a vehicle-use information providing device with high convenience can be provided.

Further, in the fifth embodiment, the first control means 202 forcibly activates the first notification means 206 to display vehicle outside information only when a notifying instruction signal is inputted. As a modification of the fifth embodiment, for example, although a detailed illustration is omitted, even when determining that a level of available attention while driving is low (warning information occurs), the second control means 252 provided in the external device 103 may output information from outside a vehicle to the first control means 202 so that the information from outside a vehicle is notified to a user, based on a notifying instruction signal that is outputted from the operation means 213 when the user operates the operation means 213.

In this case, when a notifying instruction signal is inputted to the first control means 202, the second control means 252 outputs information from outside a vehicle (for example, information received by e-mail) to the first control means 202 provided in the vehicle mounted device 102 via the connection means 104. And, the first control means 202 forcibly activates the first notification means 206 so that the information from outside a vehicle is notified to a user. Thus, it is possible to provide information in accordance with a vehicle user's preference, and a vehicle-use information providing device with high convenience can be provided.

In the fifth embodiment, an explanation has been given to an example in which warning information indicates that remaining fuel of a vehicle is small (decreased). However, warning information may indicate information indicating that a vehicle is likely to collide or information indicating that a user does not wear a seatbelt.

### INDUSTRIAL APPLICABILITY

The present invention relates to a vehicle-use information providing device using a vehicle mounted device and an external device. A vehicle mounted device may include a navigation device mounted on a vehicle, a multi-display device, and so on, as well as a vehicle meter (vehicle instrument) that displays vehicle information.

### DESCRIPTION OF REFERENCE NUMERALS

- 101: Vehicle-use information providing device
- 102: Vehicle mounted device
- 103: External device
- 104: Connection means
- 202: First control means
- 203: First storage means
- 204: First display unit
- 205: First sounding body
- 206: First notification means
- 209: First communication unit
- 213: Operation means
- 252: Second control means
- 253: Second storage means
- 254: Second display unit
- 255: Second sounding body
- 256: Second notification means
- 260: Second communication unit

## Claims

1. A vehicle-use information providing device comprising:
a vehicle mounted device which is provided with a first notification means for notifying a user of various information about a vehicle, and a first control means for activating the first notification means; and
an external device which is connected to the vehicle mounted device via a connection means, and is provided with a second control means for outputting information from outside a vehicle,
wherein the first control means has a function which determines whether or not to notify a user of the information from outside a vehicle in accordance with a level of available attention of the user while driving, and when determining that the level of available attention while driving is low, activates the first notification means after the level of available attention while driving is increased.

2. A vehicle-use information providing device comprising:
a vehicle mounted device which is provided with a first notification means for notifying a user of various information about a vehicle, and a first control means for activating the first notification means; and
an external device which is connected to the vehicle mounted device via a connection means, and is provided with a second control means for outputting information from outside a vehicle,
wherein the second control means has a function which determines whether or not to output the information from outside a vehicle to the first control means in accordance with a level of available attention of the user while driving, and when determining that the level of available attention while driving is low, outputs the information from a vehicle to the first control mans after the level of available attention while driving is increased.

3. A vehicle-use information providing device comprising:
a vehicle mounted device which is provided with a first notification means for notifying a user of various information about a vehicle, and a first control means for activating the first notification means; and
an external device which is connected to the vehicle mounted device via a connection means, and is provided with a second control means for outputting information from outside a vehicle,
wherein the first control means has a function which determines whether or not to notify a user of the information from outside a vehicle in accordance with a level of available attention of the user while driving, and when determining that the level of available attention while driving is low, activates the first notification means so that the information from outside a vehicle is notified to the user as simplified information from outside a vehicle.

4. A vehicle-use information providing device comprising:
a vehicle mounted device which is provided with a first notification means for notifying a user of various information about a vehicle, and a first control means for activating the first notification means; and
an external device which is connected to the vehicle mounted device via a connection means, and is provided with a second control means for outputting information from outside a vehicle,
wherein the second control means has a function which determines whether or not to output the information from outside a vehicle to the first control means in accordance with a level of available attention of the user while driving, and when determining that the level of available attention while driving is low, outputs the simplified information from a vehicle to the first control means so that the information from outside a vehicle is notified to the user as simplified information from outside a vehicle.

5. The vehicle-use information providing device according to claim 1 wherein even when determining that the level of the available attention while driving is low, the first control means activates the first notification means so that the information from outside a vehicle is notified to the user, based on a notifying instruction signal outputted from a predetermined operation means when the user operates the operation means.

6. The vehicle-use information providing device according to claim 2, wherein even when determining that the level of the available attention while driving is low, the second control means outputs to the first control means so that the information from outside a vehicle is notified to the user, based on a notifying instruction signal outputted from a predetermined operation means when the user operates the operation means.
